# DEMANDE DE BREVET EUROPEEN

(11) **EP 0 728 410 A1**
(43) Date de publication de la demande: **28.08.1996**
(21) Numéro de dépôt: 96400371.9
(22) Date de dépôt: 22.02.1996
(51) Int. Cl.: A01G 1/00

(54) **Utilisation d'une toile dans une technique de préculture destinée à la végétalisation de substrats et supports divers et ensemble de préculture obtenu**

(30) Priorité: 22.02.1995 FR 9502054
(71) Demandeur: PEPINIERES DE L' ORPIN, 45590 Saint Cyr en Val (FR)
(72) Inventeur: Francois, Jean-Luc, 45590 Saint-Cyr-en-Val (FR); Ovaert, Francis, 75014 Paris (FR)
(74) Mandataire: Polus, Camille

(57) **Abrégé**

L'invention concerne l'utilisation d'une toile tissée ou non tissée à caractère hydrophile dans une technique de préculture pour végétalisation de substrats et supports divers.

## Description

La présente invention concerne une technique de préculture pour la végétalisation de substrats et supports divers.

Il existe différentes techniques de végétalisation permettant de créer des écosystèmes durables sur des supports tels que les talus et accotements routiers, les jardins en milieu hostile, les toitures terrasses à végétation extensive. Celles-ci nécessitent généralement un substrat spécifique suffisamment riche pour nourrir les végétaux retenus mais assez pauvre pour éviter la prolifération de ceux non désirés.

Ce substrat doit également pouvoir assurer la stabilité de l'écosystème sur de longues périodes, et n'entraîner qu'une surcharge faible en cas d'utilisation sur un bâtiment, pour ne pas nécessiter un renforcement de la structure de celui-ci.

Le développement des végétaux se fait sur et dans le substrat :
- soit par semis de fragments : petits morceaux de branche "fraîche" (1 à 5 cm), pris sur un "pied-mère" en développement.

C'est plus précisément un tissu végétatif sans primordium racinaire susceptible de développer des bourgeons.

Le fragment développe d'abord, en puisant en premier lieu sur ses réserves propres, un système racinaire dans le substrat (qui lui même doit être bien adapté au végétal mis en place). La racine va au contact de l'humidité et descend ; puis la bouture développe à l'extérieur un système foliaire.
- soit par mise en place dans le substrat, de minimottes ou godets : plantes déjà développées dans un petit pot de quelques cm³ de substrat ou terreau riche.

Pour avoir un aspect satisfaisant et une couverture plus rapide du système foliaire, il est pratiqué une technique de préculture dite support de préculture. Cette préculture est ensuite mise en place, par plaque ou rouleau, sur le substrat.

Parmi les techniques de préculture existantes, un premier type consiste à utiliser une nappe précultivée de plantes, (par ex. des sédums, des vivaces), sur un support de culture comprenant une nappe de fils en matière plastique, (par ex. polypropylène) croisés ou tressés ou soudés dans un plan, ou, en épaisseur pour former une nappe tridimensionnelle de 1 à 2 cm d'épaisseur et de terreau.

Ce terreau peut être un mélange :
- de matières organiques : fibres de bois, tourbe brune, tourbe blonde, tourbe noire, humus...
- d'éléments nutritifs pour les végétaux : azote, phosphore, potassium, magnésium, oligo éléments, sous forme de sels...
- de matières minérales retenant l'eau : pouzzolane, pierre ponce...

Ces nappes précultivées sont donc composées:
1) d'une armature (imputrescible) qui ne sert qu'à maintenir le terreau pendant la fabrication et la mise en place de la nappe précultivée, et,
2) en général, d'un terreau relativement épais, 1 à 2 cm, pour ancrer les racines, et riche en tourbe noire, humus et éléments nutritifs pour favoriser un développement rapide de la végétation chez l'horticulteur,
3) éventuellement, un filtre en non tissé synthétique sous l'ensemble 1 et 2.

Ce type de préculture présente toutefois certains inconvénients : mises en place sur le substrat, ces nappes le "colmatent" en empêchant une bonne circulation de l'eau et de l'air. De ce fait, les mousses apparaissent en surface et colonisent le terreau et asphyxient les plantes à terme.

En outre, des graines de mauvaises herbes apportées par le vent ou les oiseaux, en surface du terreau, se développent plus vite que les plantes avoisinantes, qui ont de par leur nature rustique, un développement lent.

De plus, la production de ces nappes est relativement longue.

Il existe aussi des nappes de paille et/ou de coco, contenant de l'humus, éventuellement préensemencées de graines de gazon.

Toutefois, ces systèmes sont adaptés uniquement aux graminées, et ne conviennent pas au développement de fragments de sédums ou de vivaces. Ils ont une mauvaise tenue mécanique, sont chers, peu performants en vitesse de développement.

D'autres techniques utilisent des panneaux de laine minérale d'épaisseur 30 à 40 mm surfacés de terreau et souvent d'une grille type Enkamat®, à partir desquels est développée un végétation. Les mêmes conséquences sont observées : apparition de mousses et de mauvaises herbes, développement lent chez l'horticulteur.

La présente invention a pour objet de pallier à ces inconvénients.

A cet effet, l'invention a consisté à réaliser une technique de préculture à partir de nappes précultivées, dans laquelle le matériau supportant les végétaux ait des propriétés telles qu'il puisse constituer un support de préculture "actif" situé en partie supérieure du substrat, c'est-à-dire :
- facilitant le développement des fragments lors de leur développement, donc un support de préculture hydrophile, pour ne pas assécher les fragments d'abord.
- relativement plan et homogène pour faciliter le développement des racines par augmentation du contact avec les fragments,
- de structure discontinue pour laisser passer les fines radicelles qui se développent à partir du fragment,
- résistant mécaniquement pour être déplacé de la pépinière au site définitif.

De plus, après transfert du support de préculture sur le substrat sur site, il a été recherché que le matériau constituant du support de préculture soit "actif" : - pour capter l'eau provenant de l'humidité de l'air, la rosée, et ainsi par capillarité, alimenter les racines des plantes,
- pour laisser, par sa continuité, les graines de graminées en surface (les oiseaux ne peuvent enfouir la graine) qui meurent à la première sécheresse.

La présente invention a donc pour objet l'utilisation d'une toile tissée ou non tissée, à caractère hydrophile, dans une technique de préculture pour végétalisation de substrats et supports divers.

Selon une variante avantageuse de l'invention, chaque fil de la toile est constitué d'éléments très fins de diamètre inférieur à 30 µm, éventuellement torsadés, pour faciliter le transfert de l'eau.

Suivant un premier mode de réalisation, la toile utilisée est une toile végétale naturelle (jute, lin), ou suivant un autre mode de réalisation, la toile utilisée est une toile composée de fibres artificielles, comme la viscose (fibres de cellulose régénérée).

Selon un autre mode de réalisation, le maillage de la toile est compris entre 1 et 5 mm, et préférentiellement est voisin de 3 mm.

Selon une variante avantageuse, le grammage de la toile utilisée est compris entre 100 et 500 g/m².

Selon une autre variante avantageuse de réalisation de l'invention, la toile utilisée est une toile tissée végétale, préférentiellement de jute, qui permet une augmentation considérable de l'absorption hydrique grâce à la finesse des fibres végétales constituant les fils de chaîne et de trame de la toile.

La fibre de jute est formée d'un faisceau de 10 fibres élémentaires de diamètre de 20 à 25 micromètres avec sections polygonales et surtout avec un canal central. La finesse de chaque fibre élémentaire et son orifice central permettent une reprise d'humidité, à 20°C et 65% d'hygrométrie relative, d'environ 20 % en poids et un taux de sorption d'eau supérieur ou égal à 10 % et de préférence supérieur ou égal à 20 % et préférentiellement encore, proche de 25 %.

Les chiffres respectifs pour une viscose (fibres de cellulose régénérée) sont : 13% pour la reprise d'humidité et 25% pour le taux de sorption d'eau.

Une toile de jute présente en outre l'avantage après la mise en oeuvre du support de préculture sur le substrat, de servir de régulateur hydrique et d'écran thermique au terreau ou substrat sous-jacent, en absorbant rapidement l'humidité de l'air même relativement sec (inférieur à 40 % d'hygrométrie) et l'eau de rosée, puis en restituant ensuite lentement cette humidité aux racines. Ceci facilite la reprise des végétaux suite au transfert. Par ailleurs, la toile de jute possède une bonne tenue mécanique lors du transfert, et peut donc être déplacée de façon aisée.

Une autre caractéristique de l'invention consiste à fournir un support biodégradable en un ou deux ans, susceptible d'apporter par sa décomposition un complément nutritionnel nécessaire au développement généralisé des plantes.

La toile de jute apporte également une solution avantageuse à ce problème, car elle a la propriété de se décomposer lentement, par hydro-oxydation, en 1 à 3 ans : la matière organique se transforme en gaz carbonique et en eau, donc disparaît dans l'atmosphère, et les éléments minéraux nourrissent les racines des sédums avec une formation d'humus quantitativement négligeable.

Selon les modes de réalisation précédemment décrits, la toile végétale est posée directement sur une feuille de matière plastique servant au déplaquage des supports de préculture.

Suivant une autre variante de réalisation, le développement racinaire en longueur est facilité par interposition d'un terreau spécial de quelques millimètres (5 à 10 mm) entre la toile végétale et la feuille de matière plastique.

Ce terreau doit être à la fois le plus mince possible, "aéré" et facilitant le développement des racines des plantes, donc sans éléments fins, colmatants.

Ce terreau spécial est constitué avantageusement de tourbe brune avec un complément de fibres de bois.

Ce terreau spécial est également utile pour allonger la durée de stockage chez l'horticulteur. Les fibres de bois empêchent la tourbe brune de grumeler, tout en augmentant le rapport air/eau, ce qui favorise le développement racinaire.

Après transfert du support de préculture sur le site, les fibres de bois, par exemple de conifère, se décomposent lentement (de quelques mois à deux ans), comme la toile végétale précédemment décrite.

La tourbe brune qui présente des propriétés amalgamantes se transforme ensuite en sable organique et laisse ainsi circuler l'eau et l'air.

Le terreau spécial ne colmate pas le substrat et empêche l'apparition de mousses. Les plantes vivaces, spécialement les sédums peuvent s'enraciner profondément dans le substrat sous-jacent, et vivre de nombreuses années. La décomposition lente de la toile de jute et des feuilles mortes apportent une nourriture complémentaire.

Un écosystème durable est ainsi constitué. Le système peut encore être amélioré si le support de préculture reçoit une base d'éléments nutritifs et/ou des engrais retard. Ces éléments seront ensuite transférés par lessivage dans le support propre à voir se développer le système racinaire. Ce dernier peut donc ne pas être fertilisé préalablement.

L'invention a donc également pour objet l'utilisation d'une toile tissée ou non tissée, à caractère hydrophile, dans une technique de préculture pour végétalisation de substrats et supports divers, caractérisée en ce que la toile est associée à un terreau de 5 à 20 mm d'épaisseur, et préférentiellement de 5 à 10 mm, positionnée sous la toile avec éventuellement une couche de terreau inférieure à 3 mm au-dessus de la toile.

La toile tissée ou non tissée à caractère hydrophile, peut être avantageusement utilisée selon l'invention pour le développement de sédums ou de plantes vivaces, dont en particulier les variétés suivantes :

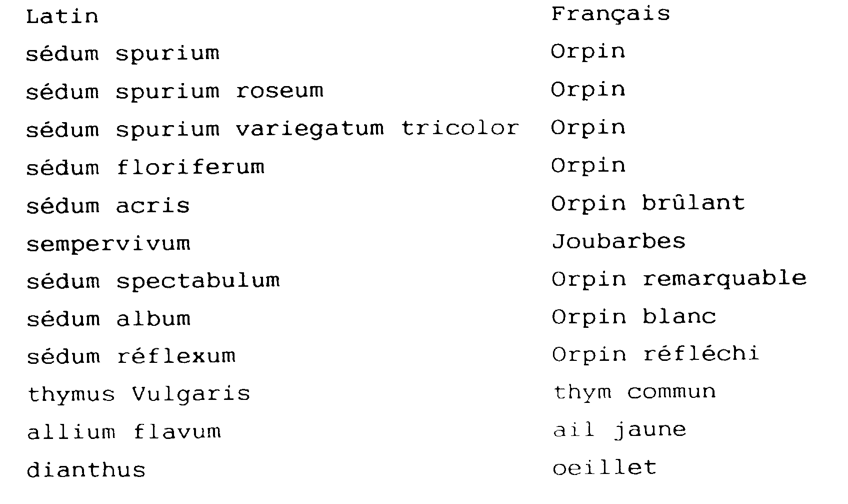

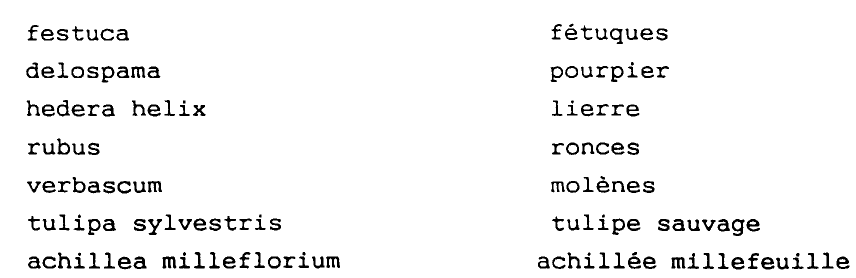

L'invention a donc également pour objet un ensemble de préculture constitué par une toile tissée ou non tissée à caractère hydrophile et des fragments de sédum ou de plantes vivaces disposés sur la toile.

Selon un mode de réalisation particulier, l'invention a également pour objet un ensemble de préculture constitué par une toile tissée ou non tissée à caractère hydrophile et des fragments de sédum ou de plantes vivaces disposés dessus, caractérisé par l'interposition d'un terreau de 5 à 20 mm d'épaisseur, entre la toile et le substrat ou support, avec éventuellement une fine couche de terreau inférieure à 3 mm d'épaisseur au-dessus de la toile. Ce terreau est avantageusement constitué de tourbe brune et de fibres de bois. La quantité de tourbe brune varie de 60 à 90 % et la quantité de fibres de bois de 10 à 40 % en extrait sec de matières organiques.

Les exemples suivants illustrent la présente invention.

### EXEMPLE 1

Un premier type de support de préculture peut être obtenu avec une toile de jute de 200 g/m², dont l'écartement entre les fils de trames et fils de chaînes est de 3,3 mm (3 fils torsadés par cm, posée directement sur un film de matière plastique, donc sans matière organique, ou minérale complémentaire.

Une grande quantité de fragments de sédums au m² (par exemple 400 : 1 tous les 5 cm) est disposée dessus et un apport d'éléments nutritifs classiques (N, P, K, Mg) et d'oligo éléments en poudre ou dissous dans l'eau est fourni.

L'apport d'eau se fait par arrosage.

On observe un enracinement, puis un développement foliaire qui se réalise en 2 à 3 semaines sous une température ambiante normale (mars à novembre) au lieu de 5 à 10 mois avec un terreau ordinaire de 2 cm d'épaisseur.

### EXEMPLE 2

Un second type de support de préculture dans lequel un terreau est placé sous la toile de jute, précédemment décrite, peut être réalisé avec un terreau de 7 mm d'épaisseur, constitué de tourbe brune et de fibres de bois de pin des Landes, en quantités respectives de 68 % et 28 %, avec incorporation d'éléments nutritifs : dolomie, sulfate de cuivre, engrais retard.

On constate un développement rapide des fragments (comme sur la toile de jute seule), et un bon enracinement des végétaux. Le déplaquage peut intervenir entre 4 semaines et 8 mois. Après transfert sur un substrat adéquat à base de pouzzolane, l'enracinement profond se réalise rapidement. Un an après le transfert, dans une ambiance humide, il n'est pas constaté d'apparition de mousses.

En outre, le support de préculture avec son terreau spécial lors du transfert, présente l'avantage:
- d'être léger,
- d'être peu épais, les végétaux s'écrasent lors de leur chargement, l'ensemble fait environ 1 à 1,5 cm d'épaisseur.

## Revendications

1. Utilisation d'une toile tissée ou non tissée à caractère hydrophile dans une technique de préculture pour végétalisation de substrats et supports divers.

2. Utilisation d'une toile selon la revendication 1, pour la préculture de fragments de sédum ou de plantes vivaces.

3. Utilisation d'une toile selon la revendication 1, caractérisée en ce que la toile a un taux de sorption d'eau supérieur ou égal à 10 %.

4. Utilisation d'une toile selon la revendication 1, caractérisée en ce que la toile a un taux de sorption d'eau supérieur ou égal à 20 %.

5. Utilisation d'une toile selon la revendication 1, caractérisée en ce que chaque fil de la toile est constitué de plusieurs éléments ayant chacun un diamètre inférieur à 30 µm.

6. Utilisation d'une toile selon la revendication 1, caractérisée en ce que les éléments constituant les fils de la toile sont d'origine végétale.

7. Utilisation d'une toile selon la revendication 1, caractérisée en ce que le maillage de la toile est compris entre 1 et 5 mm.

8. Utilisation d'une toile selon la revendication 1, caractérisée en ce que le grammage de la toile est compris entre 100 et 500 g/m².

9. Utilisation d'une toile selon l'une quelconque des revendications 1 à 8, caractérisée en ce que la toile est une toile de jute.

10. Ensemble de préculture pour végétalisation de substrats et supports divers, caractérisé en ce qu'il est constitué par une toile tissée ou non tissée, à caractère hydrophile, et des fragments de sédum ou de plantes vivaces disposés sur la toile.

11. Ensemble de préculture selon la revendication 10, caractérisé par l'interposition d'un terreau de 5 à 20 mm d'épaisseur, entre la toile et le substrat ou support, avec éventuellement une fine couche de terreau inférieure à 3 mm d'épaisseur au-dessus de la toile.

12. Ensemble de préculture selon la revendication 11, caractérisé en ce que le terreau est principalement constitué de tourbe brune et de fibres de bois.

13. Ensemble de préculture selon la revendication 12, caractérisé en ce que la quantité de tourbe brune varie de 60 à 90 % et la quantité de fibres de bois de 10 à 40 % en extrait sec de matières organiques.
